# EUROPEAN PATENT APPLICATION

(11) **EP 1 804 387 A1**
(43) Date of publication of application: **04.07.2007**
(21) Application number: 05301121.9
(22) Date of filing: 29.12.2005
(51) Int. Cl.: H04B 1/16, H04Q 7/32

(54) **Apparatus and method for discontinuous reception on a wireless network**

(71) Applicant: MOTOROLA, INC., Schaumburg, IL 60196 (US)
(72) Inventor: Muratory, Pierre, 31170, Tournefeuille (FR); Baills, Stéphane L., 31400, Toulouse (FR); Boyer-Noel, Benoît, 31620, Castenau D'Estretefonds (FR)
(74) Representative: Joly, Jean-Jacques

(57) **Abstract**

A method and apparatus for discontinuous reception on a wireless network. An ongoing communication can be entered. A burst in a radio block can be received during the ongoing communication. An unrecoverable radio block can be detected during block acquisition during the ongoing communication. A discontinuous reception can be enabled based on detecting an unrecoverable radio block.

## Description

### BACKGROUND

### 1. Field

The present disclosure is directed to a method and apparatus for discontinuous reception on a wireless network. More particularly, the present disclosure is directed to enabling discontinuous reception based on detecting bad received bursts in a radio block.

### 2. Description of Related Art

Presently, the use of wireless communication devices, such as cellular phones and other devices, is increasing in popularity. Because users desire many of these devices to be portable, many components, such as the batteries, in the devices are small. The devices can be used for telephone calls, web surfing, music playing, video game playing, and other uses of portable electronic devices- All of these activities draw power from the battery of the device. This power is limited based on the small size of the battery. Thus, different features of the device draw different amounts of power and decrease the life of the device between charges.

One feature that draws power on such a device is operation during an ongoing communication on a wireless network. The ongoing communication can draw power from the battery for both transmitting and receiving signals. Unfortunately, a receiver on a device may draw power for receiving signals even when the signals are useless. For example, a wireless network may enter a discontinuous transmission mode where it is not transmitting signals to the device. However, the device may be unaware of the discontinuous transmission mode and will still provide unnecessary power to the receiver and other related functions of the device, which will drain the battery and reduce the life of the device between charges. Furthermore, channel conditions may prevent the receiver from receiving a good signal. Again, during these conditions, the receiver can draw unnecessary power, which will drain the battery and reduce the life of the device between charges.

Thus, there is a need for a method and apparatus for discontinuous reception on a wireless network

### SUMMARY

A method and apparatus for discontinuous reception on a wireless network An ongoing communication can be entered. An unrecoverable radio block can be detected during block acquisition during the ongoing communication. A discontinuous reception can be enabled based on detecting the unrecoverable radio block.

### BRIEF DESCRIPTION OF THE DRAWINGS

The embodiments of the present disclosure will be described with reference to the following figures, wherein like numerals designate like elements, and wherein:
Fig. 1 is an exemplary block diagram of a system according to one embodiment;
Fig. 2 is a graph illustrating exemplary criteria for detecting a bad radio block according to one embodiment;
Fig. 3 is an exemplary block diagram of a wireless communication device according to one embodiment; and
Fig. 4 is an exemplary flowchart illustrating the operation of a wireless communication device according to one embodiment.

### DETAILED DESCRIPTION

In this document, relational terms such as "first," "second," and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising."

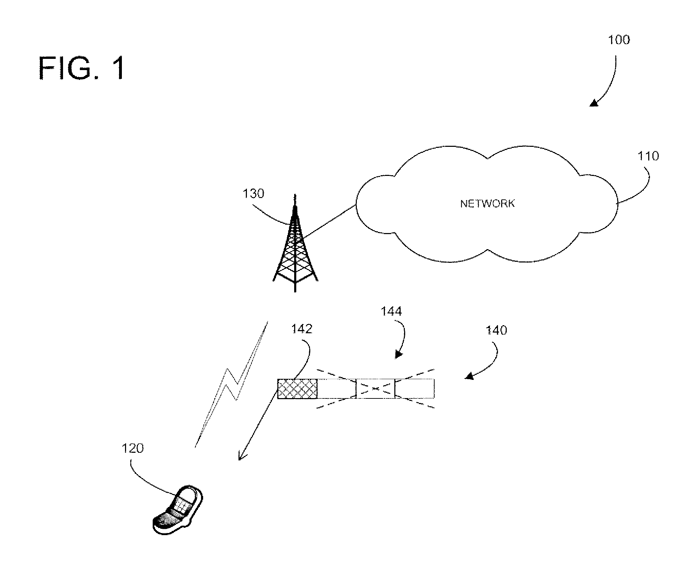

Fig. 1 is an exemplary block diagram of a system 100 according to one embodiment. The system 100 can include a network 110, a terminal 120, and a base station 130 coupled to the network 110. The terminal 120 may be a wireless communication device, such as a wireless telephone, a cellular telephone, a personal digital assistant, a pager, a personal computer, a selective call receiver, or any other device that is capable of sending and receiving communication signals on a network including wireless network.

The network 110 may include any type of network that is capable of sending and receiving signals, such as wireless signals. For example, the network 110 may include a wireless telecommunications network, a cellular telephone network, a Time Division Multiple Access (TDMA) network, a Code Division Multiple Access (CDMA) network, a satellite communications network, and other like communications systems. Furthermore, the network 110 may include more than one network and may include a plurality of different types of networks. Thus, the network 110 may include a plurality of data networks, a plurality of telecommunications networks, a combination of data and telecommunications networks and other like communication systems capable of sending and receiving communication signals.

In operation, the terminal 120 can send signals to and receive signals from the network 110 via the base station 130. For example, the terminal 120 can receive radio blocks, such as block 140. The radio block 140 can include 4 consecutive bursts, or any other number of bursts depending on the type of wireless system being used. When the network 110 has nothing to transmit during a call, it can avoid the radio block transmission in order to reduce the interference over the air. This can be called network discontinuous transmission (DTX). On some special radio blocks, such as frames, like silence descriptor frames, control frames, slow associated control channel frames, and the like, the network 110 may be obliged to transmit something, It is on these special frames that the terminal 120 can be able to know the power of the transmitted signal. On other frames the network 110 may send nothing. By detecting these discontinuous transmissions where the network 110 does not transmit a block of data, a number of receive activations in the terminal 120 can be reduced.

The radio block 140 can be an example of a block that may be cut by the network 110. For example, the network 110 may not send the block 140 if nothing is present on speech frames in the block 140. The terminal 120 can detect there is nothing transmitted on the block 140 even when it may be in an area where the signal to noise ratio (SNR) is bad, a low coverage area where decoding can be difficult, or in faded conditions where the power of bursts may be disturbed. In particular, the terminal 120 can detect that a digital signal processor (DSP) section of the terminal 120 will not be able to decode a radio block. The terminal 120 can detect this by knowing the signal strength of the received signal on the first bursts of the block 140, the signal to noise ratio on the first bursts of the block 140, the protection on a given block, such as the coding scheme and then, the number of minimum bursts necessary to well decode a block, and/or the use of special network properties information, such as the knowledge of a silence descriptor frame position, which must be transmitted by the network I 10. These four points can give the terminal 120 a clear idea of the final decoding conditions of the block 140 and the ability of the DSP to decode the block 140.

As an example, when the terminal 120 is operating for full speech on a traffic channel, the DSP may be not able to decode a block if the first bursts of the block have too low of a signal strength and too low of a signal to noise ratio (SNR), i.e., if the protection in full speech on the traffic channel is low. This can mean that we can shutdown the last receive activities of this block because the block will likely not be decoded correctly. For example, this may often happen because the network 110 is sending nothing because network 110 is doing DTX. It could also be a case where the coverage is too low or a case where there is too much fading or interference. Thus, it can be useful to find acceptable criteria to determine when the N first burst are too poor such that the entire radio block will be poorly decoded.

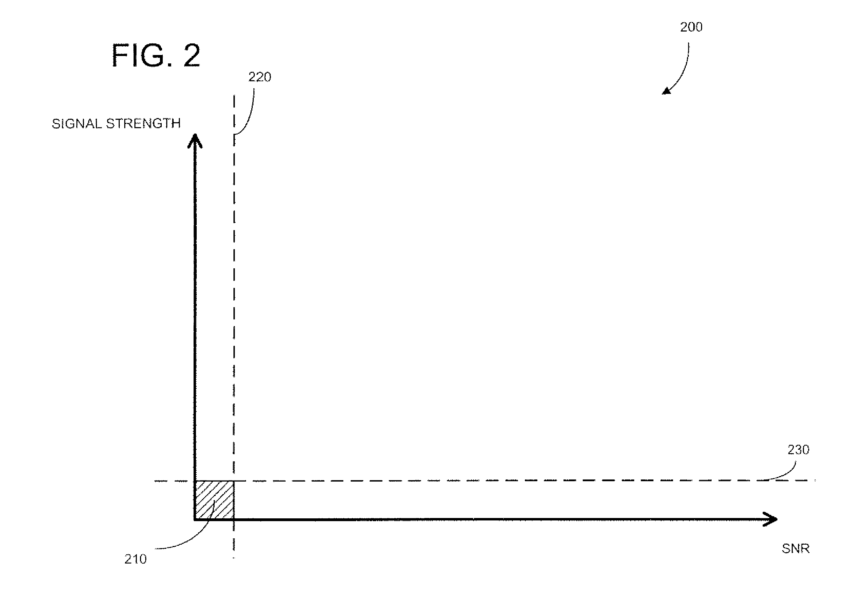

Fig. 2 is a graph 200 illustrating exemplary criteria for detecting a bad radio block according to one embodiment. The graph 200 can illustrate criteria to detect a bad decoded block based on first burst in-phase (I) and quadrature-phase (Q) samples. For each burst the terminal 120 can estimate the signal strength, provided by IQ amplitude (I²+Q²) and radio gain. Also, the terminal 120 can estimate the SNR. According to the traffic channel full speech example, it can be determined that a block will not be decoded correctly if the N firsts bursts of the radio block fulfill the condition illustrated in the shaded area 210 of the graph. In other words, if the IQ amplitude is below a threshold 230 and/or the SNR is below a threshold 220, for example, because the network is doing DTX, on a number N of first bursts, then the block will probably not be decoded correctly. N can be determined by the protection of data inside the radio block. For example, if a high level of protection is used, a first burst may be bad, but the burst may be recovered based on later bursts. The level of protection may be determined based on channel coding schemes in the network 110. The thresholds of the number of bursts N may be based on measurements in the system, known thresholds, thresholds based on empirical data, or the like.

Thus, the N first bursts of every block can be acquired. A controller in the terminal 120 can be responsible for tuning the radio automatic gain control in order to have higher amplitude on the I and Q components without saturation. For example, the controller can boost the gain of the receiver to increase the amplitude, if necessary in a low coverage situation. Also, the controller can give an indication to the DSP if it can shut down a waveform or not, i.e., whether the DSP can engage discontinuous reception and not receive the rest of the block based on the N first bursts. The indication can be used because on some frames, the DSP should receive the entire block, even if SNR or IQ amplitude is poor, such as a silence descriptor frame and/or a control frame for a traffic channel. For example, the controller can decide whether a burst can be cut or not, based on whether the burst is a silence descriptor, a control burst, an abnormal speech burst, such as monitoring or synchronization burst, or for burst used for incremental redundancy purposes, and/or a first burst of a block, In all of these instances, the decision should indicate if the burst should be acquired. Finally the controller can shutdown the next waveform/bursts/slots of a block if it judges that the signal strength, such as the IQ amplitude, and the SNR are too poor on the N first bursts. The DSP is thus responsible for computing the I²+Q² measurement of the first N bursts of each block, computing the SNR of the first N bursts, and, if the first N bursts are bad, hand the process over to the controller for the controller to shut down the receiver for the remaining burst(s) in the block. For example, if N is set to one, and the first burst 142 of the block 140 is determined to be bad, the DSP and/or a receiver in the terminal 120 can substantially ignore the remaining bursts 144.

This feature could be activated or deactivated in the terminal 120. For example, if the feature is deactivated, the decision can be systematically set so as to indicate that all bursts shall be acquired. Thus, the receiver will not be shut off. Also, a flexible means can be used to set different thresholds of IQ amplitude, SNR, and/or number of bursts N for different coding schemes or other situations.

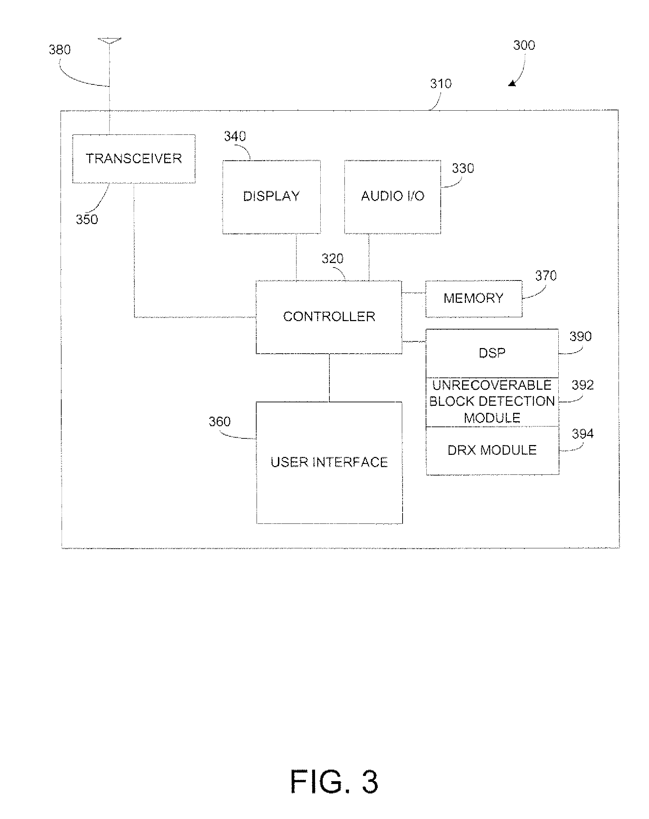

Fig. 3 is an exemplary block diagram of a wireless communication device 300, such as the terminal 120, according to one embodiment. The wireless communication device 300 can include a housing 310, a controller 320 coupled to the housing 310, audio input and output circuitry 330 coupled to the housing 310, a display 340 coupled to the housing 310, a transceiver 350 coupled to the housing 310, a user interface 360 coupled to the housing 310, a memory 370 coupled to the housing 310, and an antenna 380 coupled to the housing 310 and the transceiver 350. The wireless communication device 300 can also include a digital signal processor 390, an unrecoverable block detection module 392, and a discontinuous reception module 394. The digital signal processor 390, the unrecoverable block detection module 392, and the discontinuous reception module 394 can be coupled to the controller 320, can reside within the controller 320, can reside within the memory 370, can be autonomous modules, can be software, can be hardware, or can be in any other format useful for a module on a wireless communication device 300.

The display 340 can be a liquid crystal display (LCD), a light emitting diode (LED) display, a plasma display, or any other means for displaying information. The transceiver 350 may include a transmitter and/or a receiver. The audio input and output circuitry 330 can include a microphone, a speaker, a transducer, or any other audio input and output circuitry. The user interface 360 can include a keypad, buttons, a touch pad, a joystick, an additional display, or any other device useful for providing an interface between a user and an electronic device. The memory 370 may include a random access memory, a read only memory, an optical memory, a subscriber identity module memory, or any other memory that can be coupled to a wireless communication device.

In operation, a receiver in the transceiver 350 can receive wireless signals. The controller 320 can control the operations of the wireless communication device 300 and enter an ongoing communication on the network I 10 using the receiver. The ongoing communication can be a circuit-switched or packet-based voice call, a circuit-switched or packet-based data communication, or any other type of communication.

The unrecoverable block detection module 392 can detect an unrecoverable radio block of data during block acquisition during the ongoing communication. The unrecoverable block detection module 392 can detect an unrecoverable radio block by detecting at least one bad burst in the radio block. The unrecoverable block detection module 392 can also detect the unrecoverable radio block by detecting a number of bad bursts in the block wherein the number of bad bursts used to detect the unrecoverable radio block is based on channel coding properties, such as data protection, of the ongoing communication. The unrecoverable block detection module 392 can additionally detect the unrecoverable radio block by detecting both a poor signal to noise ratio of the received block based on the signal to noise ratio being below a threshold and a poor signal strength of the received block based on the signal strength being below a threshold. The unrecoverable block detection module 392 can further detect the unrecoverable radio block by detecting the wireless network 110 is in a discontinuous transmission mode. The discontinuous reception module 394 can enable a discontinuous reception based on detecting the unrecoverable radio block. The discontinuous reception module 394 can also enable a discontinuous reception by disabling at least one receiver activity of the receiver. The discontinuous reception module 394 can additionally enable a discontinuous reception by ignoring remaining bursts in the radio block.

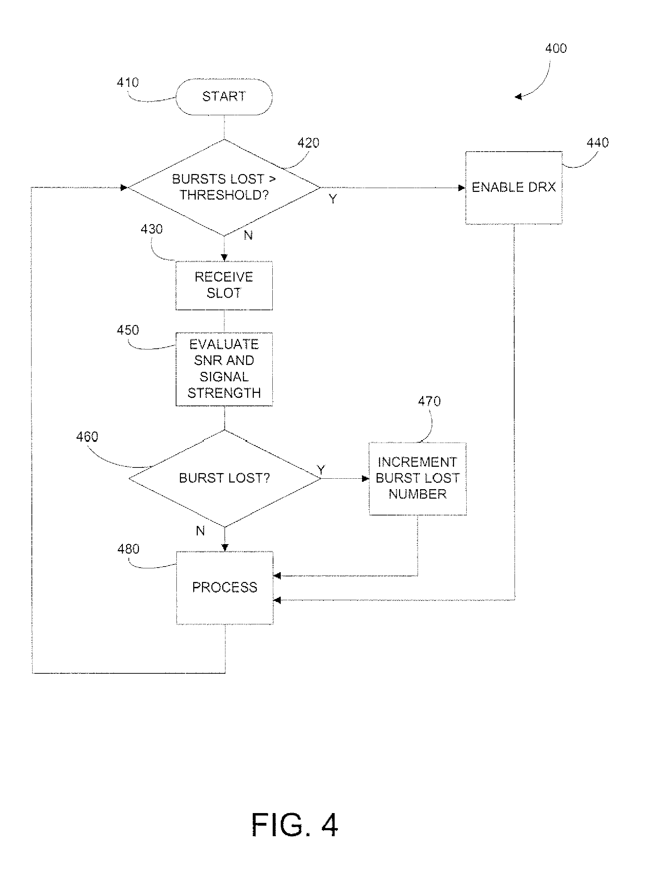

Fig. 4 is an exemplary flowchart 400 illustrating the operation of the wireless communication device 300 according to another embodiment. The flowchart 400 can illustrate the procedure of the wireless communication device 300 for each received block of data. In step 410, the flowchart 400 begins with the wireless communication device 300 entering an ongoing communication on a wireless network and beginning the block acquisition procedure. The ongoing communication can be a circuit-switched or packet-based voice call, a circuit-switched or packet-based data communication, or any other type of communication that does not oblige the terminal to systematically open a receiver for all bursts. For example, typically unlike packet data transfer with incremental redundancy. In step 420, the wireless communication device 300 can determine if the number of lost bursts is greater than a threshold. Of course, if the first burst in a radio block is yet to be received, no burst will have yet have been lost and the number will be below the threshold. If the number of lost bursts is below the threshold, in step 430, the wireless communication device 300 can receive a subsequent burst, from the radio block.

In step 450, the wireless communication device 300 can evaluate the SNR and signal strength of the burst, In step 460, the wireless communication device 300 can determine if the burst has been lost which can assist in determining if a radio block is unrecoverable.

For example, the wireless communication device 300 can detect an unrecoverable radio block during its acquisition while in an ongoing communication. The wireless communication device 300 can detect an unrecoverable radio block by detecting at least one bad burst in the radio block. The wireless communication device 300 can also detect an unrecoverable radio block by detecting poor radio transmission conditions. The wireless communication device 300 can additionally detect an unrecoverable radio block by detecting a number of bad burst in that radio block, wherein the number of bad burst used to ascertain the unrecoverability of the radio block is based on channel coding properties of the ongoing communication. The wireless communication device 300 can further detect an unrecoverable radio block by detecting both a poor signal to noise ratio of a received radio block based on the signal to noise ratio being below a threshold and a poor signal strength of the received radio block based on the signal strength being below a threshold. The wireless communication device 300 can dynamically tailor the thresholds using discontinuous transmission mode properties of the network. The wireless communication device 300 can also detect an unrecoverable radio block by detecting the wireless network is in a discontinuous transmission mode.

lf the wireless communication device 300 determines burst has been lost in step 460, in step 470, the wireless communication device 300 can increment a counter for the number of lost bursts. In step 480, the wireless communication device 300 can process the burst, the information regarding the number of lost burst(s), and any other information and then return to step 420 until the entire block has been processed. If, in step 420. the wireless communication device 300 determines the number of lost burst(s) is greater than a threshold, in step 440, the wireless communication device 300 can enable a discontinuous reception mode. Thus, the wireless communication device 300 can enable a discontinuous reception mode based on detecting at least one burst of unrecoverable data. During the discontinuous reception, the wireless communication device 300 can ignore remaining burst(s) in the block of data. For example, the wireless communication device 300 can ignore the remaining burst(s) by disabling at least one receiver activity, by disabling selected power consuming characteristics of a receiver, by not processing subsequent bursts, or by any other means of discontinuous reception.

Thus, the present disclosure can, among other benefits, provide for saving current drain during a circuit switched call, during a general packet radio service communication, or during any other communication by cutting some radio blocks from reception. The present disclosure can also provide for reducing unnecessary processing of unrecoverable radio blocks .

The method of this disclosure is preferably implemented on a programmed processor. However, the controllers, flowcharts, and modules may also be implemented on a general purpose or special purpose computer, a programmed microprocessor or microcontroller and peripheral integrated circuit elements, an ASIC or other integrated circuit, a hardware electronic or logic circuit such as a discrete element circuit, a programmable logic device such as a PLD, PLA, FPGA or PAL, or the like. In general, any device on which resides a finite state machine capable of implementing the flowcharts shown in the Figures may be used to implement the processor functions of this disclosure.

While this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims, Accordingly, the preferred embodiments of the disclosure as set forth herein are intended to be illustrative, not limiting. Various changes may be made without departing from the spirit and scope of the disclosure.

## Claims

1. A method comprising:
entering an ongoing communication on a wireless network;
detecting an unrecoverable radio block during radio block acquisition during the ongoing communication; and
enabling a discontinuous reception based on detecting the radio block of unrecoverable data.

2. The method according to claim 1, wherein detecting a radio block of unrecoverable data further comprises detecting at least one bad burst in a radio block, and
wherein enabling a discontinuous reception comprises ignoring remaining bursts in the radio block.

3. The method according to claim 1, wherein detecting an unrecoverable radio block further comprises detecting poor radio transmission conditions.

4. The method according to claim 1, wherein detecting an unrecoverable radio block further comprises detecting a number of bad bursts in a radio block, wherein the number of bad bursts used to detect unrecoverability of the radio block is based on channel coding properties of the ongoing communication.

5. The method according to claim 1, wherein detecting an unrecoverable radio block further comprises detecting both a poor signal to noise ratio of a received block based on the signal to noise ratio being below a threshold and a poor signal strength of the received block based on the signal strength being below a threshold.

6. The method according to claim 5, wherein detecting an unrecoverable radio block uses network discontinuous transmission mode properties to dynamically tailor the thresholds.

7. The method according to claim 1, wherein detecting an unrecoverable radio block further comprises detecting the wireless network is in a discontinuous transmission mode.

8. The method according to claim 1, wherein enabling a discontinuous reception further comprises disabling at least one receiver activity.

9. The method according to claim 1, wherein the ongoing communication comprises a communication where acquisitions of a given radio block are not compulsory.

10. A wireless communication device comprising:
a receiver configured to receive wireless signals;
a controller coupled to the receiver, the controller configured to control the operations of the wireless communication device and enter an ongoing communication on a network using the receiver;
an unrecoverable radio block detection module configured to detect an unrecoverable radio block during radio block acquisition during the ongoing communication; and
a discontinuous reception module configured to enable a discontinuous reception based on detecting unrecoverability of the radio block.

11. The wireless communication device according to claim 10, wherein the unrecoverable radio block detection module is further configured to detect the unrecoverable radio block by detecting at least one bad burst in a radio block, and
wherein the discontinuous reception module is further configured to enable a discontinuous reception by ignoring at least one remaining bursts in the radio block.

12. The wireless communication device according to claim 10, wherein the unrecoverable radio block detection module is further configured to detect the unrecoverability of the radio block by detecting a number of bad bursts in a radio block , wherein the number of bad bursts used to detect the unrecoverable radio block is based on channel coding properties of the ongoing communication.

13. The wireless communication device according to claim 10, wherein the unrecoverable radio block detection module is further configured to detect the unrecoverable radio block by detecting both a poor signal to noise ratio of the received block based on the signal to noise ratio being below a threshold and a poor signal strength of the received radio block based on the signal strength being below a threshold.

14. The wireless communication device according to claim 10, wherein the unrecoverable radio block detection module is further configured to detect the unrecoverable radio block by detecting the network is in a discontinuous transmission mode.

15. The wireless communication device according to claim 10, wherein the discontinuous reception module is further configured to enable a discontinuous reception by disabling at least one receiver activity of the receiver.

16. The wireless communication device according to claim 10, wherein the ongoing communication comprises a logical channel that is not mandatory to receive.

17. A method of operating a wireless communication device including a receiver on a wireless network, the method comprising:
entering an ongoing communication on the wireless network;
detecting at least one bad burst in a radio block during radio block acquisition in the ongoing communication; and
ignoring at least one remaining bursts in the radio block based on detecting the at least one bad burst in the radio block.

18. The method according to claim 17, wherein detecting at least one bad burst further comprises detecting both a poor signal to noise ratio of a received radio block based on the signal to noise ratio being below a threshold and a poor signal strength of the received radio block based on the signal strength being below a threshold.

19. The method according to claim 17, wherein enabling a discontinuous reception further comprises disabling at least one receiver activity.
